# EUROPÄISCHE PATENTSCHRIFT

(11) **EP 0 914 398 B1**
(45) Veröffentlichungstag und Bekanntmachung des Hinweises auf die Patenterteilung: **22.10.2003**
(21) Anmeldenummer: 97936557.4
(22) Anmeldetag: 16.07.1997
(51) Int. Cl.: C09J 163/00, C08G 59/62

(54) **THERMISCH HARTBARES EINKOMPONENTIGES LVA(=LOW VISKOSITY ADHESIVE)-KLEBSTOFFSYSTEM MIT VERBESSERTEN LAGERUNGSEIGENSCHAFTEN**
HEAT-SETTING SINGLE-COMPONENT LVA (LOW-VISCOSITY ADHESIVE) SYSTEM WITH IMPROVED STORAGE PROPERTIES
SYSTEME D'ADHESIF DE FAIBLE VISCOSITE A UN COMPOSANT DURCISSABLE THERMIQUEMENT A PROPRIETES DE STOCKAGE AMELIOREES

(30) Priorität: 23.07.1996 DE 19629750
(43) Veröffentlichungstag der Anmeldung: 12.05.1999
(73) Patentinhaber: SIEMENS AKTIENGESELLSCHAFT, 80333 München (DE)
(72) Erfinder: HÖHN, Klaus, D-82024 Taufkirchen (DE); BAYER, Heiner, D-82140 Olching (DE)
(86) Internationale Anmeldenummer: DE9701504
(87) Internationale Veröffentlichungsnummer: WO98003605

(56) Entgegenhaltungen:
- DE-A- 3 008 497
- US-A- 4 480 059

## Beschreibung

Die Erfindung betrifft ein Gießharzsystem mit verbesserten Lagerungseigenschaften, das zur Bildung von Verklebungen mit Maßtoleranzen im µm- und Sub-µm-Bereich (kleiner 1 µm) geeignet ist.

Aus der 94 E 1887 (amtl. Aktenzeichen noch unbekannt), deren Inhalt hiermit zum Gegenstand der vorliegenden Beschreibung gemacht wird, ist ein thermisch härtbares einkomponentiges Klebstoffsystem bekannt, das bei der Langzeitlagerung, d. h. beispielsweise bei der Lagerung von sechs Monaten und mehr, einen Anstieg in der Viskosität verzeichnet. Viskositätserhöhung führt zu veränderten Abtropf- und Verlaufseigenschaften des Klebstoffsystems, die die Dosiergenauigkeit erschweren. Insbesondere bei der Applikation geringer Klebstoffmengen in der Mikroklebetechnik bereiten diese Effekte dann oft Schwierigkeiten, die einen reproduzierbaren Klebstoffauftrag für eine Massenfertigung z. B. im Bereich der Mikrooptik, erschweren. Zur Inhibierung der in der Mischung enthaltenen Initiatoren haben diese Klebstoffsysteme oftmals basische Zusätze. Die oft flüchtigen basischen Zusätze können außerdem zu gesundheitsschädigenden Geruchsbelästigungen während der Verarbeitung führen und beeinträchtigen die Härtungsreaktion bei der Verklebung, vor allem in dünneren Schichten.

Es besteht daher ein Bedarf an Klebstoffsystemen, bei denen auf die basischen Zusätze verzichtet werden kann und die eine verbesserte Lagerstabilität hinsichtlich des Erhalts ihrer niedrigen Viskosität haben, d.h. über die Lagerzeit ihre Viskosität nahezu nicht ändern.

Aufgabe der vorliegenden Erfindung ist es daher, ein Klebstoffsystem zur Verfügung zu stellen, das auf basische Zusätze verzichten kann und verbesserte Lagerstabilität hinsichtlich seiner niedrigen Viskosität hat.

Allgemeine Erkenntnis der Erfindung ist, daß die Zugabe von geringen Mengen an Metallkomplexverbindung, vorteilhafterweise Zinkkomplexe, zu den bekannten Klebstoffsystemen bewirkt, daß die Klebstoffsysteme bei Lagerung im Kühlschrank (bei ca. 5°C bis 8°C) erheblich länger ihre niedrige Viskosität beibehalten.

Gegenstand der vorliegenden Erfindung ist ein thermisch härtbares, einkomponentiges Klebstoffsystem, das folgende Bestandteile umfaßt:
mindestens 60 Gew% eines Gießharzes,
2 - 30 Gew% eines Alkohols oder Zuckers,
0,2 - 2,0 Gew% eines thermischen Initiators,
0,2 - 2,0 Gew% eines Haftvermittlers und/oder
0 - 3,0 Gew% eines Verlaufshilfsmittels und/oder
0 - 4 Gew% eines Thixotropiermittels und/oder eines Fließmodifikators und
0,2 - 5,0 Gew% einer Metallkomplexverbindung, ausgewählt aus der Gruppe von Übergangsmetallverbindungen von
   - Zink, Zirkon, Eisen, Cobalt, Titan, Nickel, Molybdän und Mangan, oder
   - Zinn, Magnesium oder Aluminium, sowie
   - seltene Erden wie Cer
mit üblichen organischen Liganden, wie Aminosäuren, Acetat, allg. Carbonsäuren, Aminen und Acetylacetonaten.

Weitere vorteilhafte Ausgestaltungen ergeben sich aus den Unteransprüchen sowie der Beschreibung und den Beispielen. Darüber hinaus ist Gegenstand der vorliegenden Erfindung die Verwendung des Klebstoffsystems zur Bildung von Verklebungen mit Maßtoleranzen im µm- und Sub-µm-Bereich.

Als "Gießharz" im Sinne der vorliegenden Erfindung werden thermisch härtbare Harzsysteme und Reaktionsharze verstanden, die so niederviskos sind, daß sie durch Gießen in eine entsprechende Form eingefüllt werden können, in der sie dann thermisch, d. h. durch Temperaturerhöhung bei Vorhandensein von geeigneten Additiven (Initiatoren, Beschleuniger, andere Komponenten) aushärtbar sind. Erfindungsgemäß ist ein bevorzugtes Gießharz das Epoxidgießharz. Das Gießharz ist in der erfindungsgemäßen Formulierung in einer Menge von mindestens 60 Gew% enthalten, vorteilhafterweise in einer Menge von 75 bis 95 Gew%, vorzugsweise zwischen 80 und 95 Gew% und besonders bevorzugt im Bereich zwischen 85 und 93 Gew%.

Als "Epoxidgießharz" können cyclo-aliphatische Epoxidharze wie beispielsweise das Harz CY177 von Ciba Geigy (ein Bis3,4-Epoxycyclohexylmethyl)-adipat oder das Harz CY179 ebenfalls von Ciba Geigy (ein 3,4-Epoxy-cyclo-hexylmethyl-3',4'-epoxycyclo-hexancarboxylat) eingesetzt werden. Außerdem sind lineare aliphatische Epoxidharze z. B. epoxidiertes Polybutadien oder epoxidiertes Sojabohnenöl geeignet. Ebenso geeignet sind andere kationisch härtende Harze wie Vinylether oder Vinylaromaten. Außerdem sind Epoxidharze vom Glycidylether-Typ geeignet. Als Basis für die Glycidylether können dienen: Bisphenole, z. B. Bisphenol A, Di- oder Polyhydroxyaromaten, z. B. Resorcin, Polyarylalkyle mit phenolischen OH-Gruppen, Novolake, Polyalkylenglykole oder auch Mehrfachalkohole, z. B. Butandiol, Hexandiol, Glycerin oder Pentaerythritol. Weiterhin geeignet sind Verbindungen von Glycidylether-Ester-Typ, z. B. Para-Hydroxybenzoesäure-Glycidyletherester; reine Glycidylester von Mehrfachcarbonsäuren mit aliphatischem oder aromatischem Kern, z.B. Hexahydrophthalsäure oder Phthalsäure.

Als "Alkohole oder Zucker" werden erfindungsgemäß Alkohole mit 1-15 Hydroxygruppen oder Zucker eingesetzt. Bevorzugt werden Alkohole mit 1 bis 5 Hydroxygruppen verwendet. Das Grundgerüst des Alkohohls oder Zuckers kann dabei beliebig variieren, es kann aliphatisch, cyclisch oder bicyclisch sein, es kann lediglich aus Einfachbindungen oder auch aus Mehrfachbindungen bestehen und es kann sich auch um ein aromatisches System handeln. Bevorzugt eingesetzt wird u. a. der TCD-Alkohol DM von der Fa. Hoechst, ein 3(4),8(9)Bis(hydroxymethyl)tricyclo[5.2.1.0^{2,6}]decan. Der, bevorzugt mehrwertige, Alkohol ist in der Klebstofformulierung mit einem Masseanteil zwischen 2 und 30 Gew% enthalten. Bevorzugt hat er einen Masseanteil zwischen 2,5 und 20 Gew%, besonders bevorzugt einen Anteil zwischen 4,5 und 12 Gew%.

Als thermischer Initiator können alle gängigen, nach einem kationischen Mechanismus härtenden, Initiatoren, z.B. Onium-Salze, eingesetzt werden. Hier wurde bevorzugt S-Benzylthiolaniumhexafluoroantimonat von der Fa. Aldrich verwendet.

Als Haftvermittler wird A187 von der Fa. Hüls, ein 3-Glycidyloxypropyltrimethoxysilan verwendet.

Als Verlaufshilfsmittel kann Modaflow (Fa. Monsanto)und als Fließmodifikatoren oder Thixotropiermittel können beispielsweise die kommerziell verfügbaren Aerosil-Typen der Fa. Degussa verwendet werden.

Als Metallkomplexverbindungen werden Zn²⁺ -Verbindungen oder andere Metallkomplexe von Übergangsmetallen wie
- Zirkon, Eisen, Cobalt, Titan, Nickel, Molybdän und Mangan, oder
- Zinn, Magnesium oder Aluminium, sowie
- seltene Erden wie Cer
mit üblichen organischen Liganden, wie Aminosäuren, Acetat, allg. Carbonsäuren, Amine und Acetylacetonate etc. verwendet. Die zugesetzte Menge an Zinkkomplex-Verbindung beträgt zwischen 0,2 und 5 Gew% bevorzugt kleiner 3 Gew% und besonders bevorzugt ist die zugegebene Menge kleiner 1 Gew%.

Neben den bereits angeführten Bestandteilen können im erfindungsgemäßen Klebstoffsystem noch weitere, an sich bekannte Zusätze und Additive enthalten sein. Dadurch können die Klebstoffsysteme auch zusätzliche Eigenschaften erhalten, wie besondere Farbe oder auch Transparenz, sowie Schwerentflammbarkeit oder Temperaturbeständigkeit. Zusätze in diesem Sinne können deshalb beispielsweise Farbstoffe, Pigmente, Fließmodifikatoren, allgemein Stabilisatoren, Flammschutzmittel oder mineralische oder andere Füllstoffe sein. Dabei ist es fast immer möglich, bestimmte Eigenschaften durch Zusätze zu erzielen, beispielsweise selektive Absorption oder Transparenz durch einen Farbstoff.

Bei der Herstellung des Klebstoffsystems wird wie üblich vorgegangen. Die Formulierungsbestandteile, wie das Epoxidharz, der mehrwertige Alkohol, der thermische Initiator, der Haftvermittler und der Metallkomplex werden, ggf. auch unter mäßig erhöhten Temperaturen und mit wieder entfernbarem Lösungsmittel, gleichmäßig ineinander gemischt. Für die Herstellung des Klebstoffsystems kann also auf übliche, dem Stand der Technik vertraute Methoden zurückgegriffen werden.

Im folgenden wird die Erfindung anhand eines Ausführungsbeispiels noch näher erläutert.

Tabelle 1 zeigt die Formulierungsbestandteile repräsentativer Klebstoffsysteme. Von den vier angegebenen Klebstoffsystemen enthalten 2 (die mit einem Stern * gekennzeichnet sind) erfindungsgemäß einen Zinkkomplex (HK170* und HK 191*) und zwei andere Vergleichssysteme sind ohne Zinkkomplex und entsprechen dem Stand der Technik (HK 170 und HK 191).

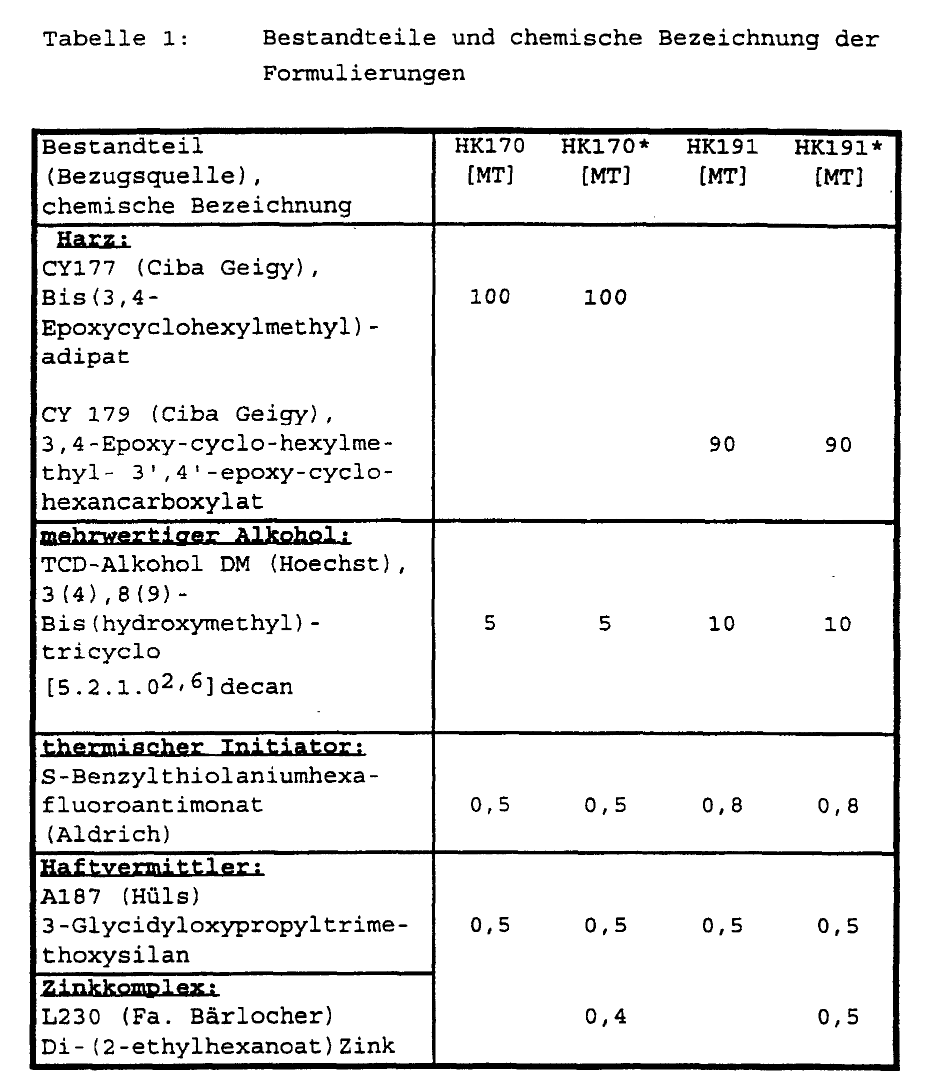

Die in Tabelle 1 angegebenen Verbindungen wurden dann einem Langzeitversuch unterworfen. Dabei wurde die Lagerstabilität der jeweils einen Zinkkomplex enthaltenden und einen Zinkkomplex nicht enthaltenden Klebstoffsysteme bei einer Lagertemperatur von 8 °C verglichen. Die Anfangsviskosität von 120 mPas (Messung der Viskosität bei 60°C) steigt bei HK 170 nach 6 Monaten Lagerung bei 8°C auf 200 mPas an, bei HK 170* mit 0,4 Gew% L 230-Zinkkomplex-Zugabe innerhalb eines Jahres, also nach doppelt soviel Zeit, bei ansonsten gleichen Bedingungen jedoch nur auf 140 mPas. Am Beispiel der Verbindungen HK 170 und HK 170* ist deshalb zu erkennen, daß die Viskosität der Verbindung ohne Zinkkomplex bereits nach 6 Monaten umwesentlich mehr angestiegen ist, als die Viskosität des den Zinkkomplex enthaltenden Klebstoffsystems nach 12 Monaten. Damit konnte gezeigt werden, daß selbst bei einer so geringen Zugabemenge wie von 0,4 Gew% Zinkkomplex eine deutliche Steigerung der Lagerstabilität der Formulierungen bewirkt wird. Das Härtungsverhalten der Formulierungen auf Substraten wie Glas, PA (Polyamid), PPA (Polyphthalamid), PMMA (Polymethylmethacrylat) und PP(Polypropylen) wird durch die Zinkkomplex-Zugabe nicht beeinträchtigt.

Es wurden DSC-Untersuchungen (DSC=Differential scanning calorimetrie) durchgeführt, die darauf hindeuten, daß die modifizierten Gießharzsysteme geringfügig höhere Onsettemperaturen aufweisen. Das Härtungsverhalten bei den üblichen Härtungstemperaturen von 120 °C wird davon aber nicht wesentlich betroffen (Tabelle 3).

**Tabelle 3:**

| Ausgewählte DSC-Kenndaten: | | |
|---|---|---|
| | HK 191 | HK 191* |
| T-Onset [°C] | 129 | 142 |
| T-Peak [°C] | 146 | 161 |
| ΔH_{R} [-J/g] | 564 | 546 |
| Restreaktion [%] | | |
| nach 30 min 120 °C | 15,0 | 18,6 |

Mit dem erfindungsgemäßen Klebstoffsystem ist eine automatische und sichere Mikrodosierung für elektronische und optoelektronische Komponenten im µm- und/oder Sub-µm-Bereich möglich. Das erfindungsgemäße einkomponentige Epoxidharz mit Zinkkomplex härtet nicht sofort an, so daß das Fügen der einzelnen Bauelemente möglich ist, bis die Fixierung eintritt.

Die Epoxidharzkomponente, sowie das gesamte Klebstoffsystem ist niederviskos genug, um bei Mikroverklebungen verwendet zu werden. Dank der Zugabe an Zinkkomplex wird auch bei der Verarbeitung des Klebstoffsystems keine Geruchsbelästigung durch das Verdampfen von basischen Zusätzen auftreten. Die Klebstofformulierung ist bei einer Kühlschranktemperatur von 8 °C über 12 Monate lagerstabil, ohne daß sich die Viskosität deutlich erhöhen würde. Dieser Erhalt der niedrigen Viskosität führt dazu, daß das erfindungsgemäße Klebstoffsystem anders als die Klebstoffe des Standes der Technik auch nach längerer Lagerung noch problemlos, insbesondere für die Mikrodosiertechnik, verwendbar ist.

## Patentansprüche

1. Thermisch härtbares, einkomponentiges Klebstoffsystem, das folgende Bestandteile umfaßt:
mindestens 60 Gew% eines Gießharzes,
2 - 30 Gew% eines Alkohols oder Zuckers,
0,2 - 2,0 Gew% eines thermischen Initiators,
0,2 - 2,0 Gew% eines Haftvermittlers und/oder
0 - 3,0 Gew% eines Verlaufshilfsmittels und/oder
0 - 4 Gew% eines Thixotropiermittels und/oder eines Fließmodifikators und
0,2 - 5,0 Gew% einer Metallkomplexverbindung, ausgewählt aus der Gruppe von Übergangsmetallverbindungen von
- Zink, Zirkon, Eisen, Cobalt, Titan, Nickel, Molybdän und Mangan, oder
- Zinn, Magnesium oder Aluminium, sowie
- seltene Erden wie Cer
mit üblichen organischen Liganden, wie Aminosäuren, Acetat, allg. Carbonsäuren, Aminen und Acetylacetonaten.

2. Klebstoffsystem nach Anspruch 1, umfassend:
85 - 93 Gew% eines Epoxidgießharzes,
4,5 - 12 Gew% eines mehrwertigen Alkohols,
0,7 - 1,0 Gew% eines thermischen Initiators,
0,3 - 0,6 Gew% eines Haftvermittlers und/oder
0 - 1,5 Gew% eines Verlaufshilfsmittels und/oder
0 - 2,0 Gew% eines Thixotropiermittels und/oder eines Fließmodifikators und
0,5 - 2,0 Gew% eines Metallkomplexes, ausgewählt aus der Gruppe von Übergangsmetallverbindungen von
- Zink, Zirkon, Eisen, Cobalt, Titan, Nickel, Molybdän und Mangan, oder
- Zinn, Magnesium oder Aluminium, sowie
- seltene Erden wie Cer
mit üblichen organischen Liganden, wie Aminosäuren, Acetat, allg. Carbonsäuren, Aminen und Acetylacetonaten.

3. Klebstoffsystem nach Anspruch 1 oder 2, umfassend:
88,4 Gew% eines Epoxidgießharzes,
9,82 Gew% eines mehrwertigen Alkohols,
0,79 Gew% eines thermischen Initiators,
0,49 Gew% eines Haftvermittlers und
0,49 Gew% eines Metallkomplexes, ausgewählt aus der Gruppe von Übergangsmetallverbindungen von
- Zink, Zirkon, Eisen, Cobalt, Titan, Nickel, Molybdän und Mangan, oder
- Zinn, Magnesium oder Aluminium, sowie
- seltene Erden wie Cer
mit üblichen organischen Liganden, wie Aminosäuren, Acetat, allg. Carbonsäuren, Aminen und Acetylacetonaten.

4. Klebstoffsystem nach einem der Ansprüche 1 bis 3, bei dem das Gießharz ein Epoxidharz, insbesondere Bis(3,4-Epoxycyclo-hexylmethyl)-adipat oder 3,4-Epoxy-cyclo-hexylmethyl-3',4'-epoxy-cyclo-hexancarboxylat, der mehrwertige Alkohol 3(4),8(9)-Bis(hydroxymethyl)-tricyclo[5.2.1.0^{2,6}]decan und der Metallkomplex Di-(2-ethylhexanoat)Zink ist.

5. Verwendung des Klebstoffsystems nach Anspruch 1 zur Bildung von Präzisionsklebungen mit Maßtoleranzen im µm- und Sub-µm-Bereich.

## Claims

1. A thermally curable single-component adhesive system comprising:
at least 60% by weight of a casting resin,
2-30% by weight of an alcohol or sugar,
0.2-2.0% by weight of a thermal initiator,
0.2-2.0% by weight of an adhesion promoter and/or
0-3.0% by weight of a levelling assistant and/or
0-4% by weight of a thixotropic agent and/or a flow modifier and
0.2-5.0% by weight of a metal complex compound selected from the group consisting of transition metal compounds of
- zinc, zirconium, iron, cobalt, titanium, nickel, molybdenum, and manganese, or
- tin, magnesium or aluminium, and also
- rare earth elements such as cerium
with customary organic ligands, such as amino acids, acetate, carboxylic acids in general, amines, and acetylacetonates.

2. The adhesive system of claim 1, comprising:
85-93% by weight of an epoxy casting resin,
4.5-12% by weight of a polyhydric alcohol,
0.7-1.0% by weight of a thermal initiator,
0.3-0.6% by weight of an adhesion promoter and/or
0-1.5% by weight of a levelling assistant and/or
0-2.0% by weight of a thixotropic agent and/or a flow modifier, and
0.5-2.0% by weight of a metal complex compound selected from the group consisting of transition metal compounds of
- zinc, zirconium, iron, cobalt, titanium, nickel, molybdenum, and manganese, or
- tin, magnesium or aluminium, and also
- rare earth elements such as cerium
with customary organic ligands, such as amino acids, acetate, carboxylic acids in general, amines, and acetylacetonates.

3. The adhesive system of claim 1 or 2, comprising:
88.4% by weight of an epoxy casting resin,
9.82% by weight of a polyhydric alcohol,
0.79% by weight of a thermal initiator,
0.49% by weight of an adhesion promoter, and
0.49% by weight of a metal complex selected from the group consisting of transition metal compounds of
- zinc, zirconium, iron, cobalt, titanium, nickel, molybdenum, and manganese, or
- tin, magnesium or aluminium, and also
- rare earth elements such as cerium
with customary organic ligands, such as amino acids, acetate, carboxylic acids in general, amines, and acetylacetonates.

4. The adhesive system of any of claims 1 to 3, wherein the casting resin is an epoxy resin, in particular bis(3,4-epoxycyclohexylmethyl) adipate or 3,4-epoxycyclohexylmethyl 3',4'-epoxycyclohexanecarboxylate, the polyhydric alcohol is 3(4),8(9)-bis(hydroxymethyl)tricyclo[5.2.1.0^{2,6}]decane, and the metal complex is di(2-ethylhexanoate)zinc.

5. The use of the adhesive system of claim 1 for forming precision glued bonds with dimensional tolerances in the µm and sub-µm region.

## Revendications

1. Système d'adhésif à un composant, thermodurcissable, qui comprend les composants suivants:
au moins 60 % en poids d'une résine de coulée,
de 2 à 30 % en poids d'un alcool ou d'un sucre,
de 0,2 à 2,0 % en poids d'un initiateur thermique,
de 0,2 à 2,0 % en poids d'un auxiliaire d'adhérence et/ou
de 0 à 3,0 % en poids d'un auxiliaire de coulée et/ou
de 0 à 4 % en poids d'un agent thixotropique et/ou d'un modificateur de fluidité et
de 0,2 à 5,0 % en poids d'un composé de complexe de métal sélectionné dans le groupe des composés des métaux de transition, à savoir le zinc, le zirconium, le fer, le cobalt, le titane, le nickel, le molybdène et le manganèse ou
- l'étain, le magnésium ou l'aluminium ainsi que
- les terres rares, par exemple le cérium
avec les ligands organiques habituels, par exemple des acides aminés, un acétate, les acides carboxyliques de manière générale, les amines et les acétylacétonates.

2. Système d'adhésif selon la revendication 1, qui comprend:
de 85 à 93 % en poids d'une résine époxyde de coulée,
de 4,5 à 12 % en poids d'un alcool polyfonctionnel,
de 0,7 à 1,0 % en poids d'un initiateur thermique,
de 0,3 à 0,6 % en poids d'un auxiliaire d'adhérence et/ou
de 0 à 1,5 % en poids d'un auxiliaire de coulée et/ou
de 0 à 2 % en poids d'un agent thixotropique et/ou d'un modificateur de fluidité et
de 0,5 à 2,0 % en poids d'un composé de complexe de métal sélectionné dans le groupe des composés des métaux de transition, à savoir le zinc, le zirconium, le fer, le cobalt, le titane, le nickel, le molybdène et le manganèse ou
- l'étain, le magnésium ou l'aluminium ainsi que
- les terres rares, par exemple le cérium
avec les ligands organiques habituels, par exemple des acides aminés, un acétate, les acides carboxyliques de manière générale, les amines et les acétylacétonates.

3. Système d'adhésif selon la revendication 1 ou 2, qui comprend:
88,4 % en poids d'une résine époxyde de coulée,
9,82 % en poids d'un alcool polyfonctionnel,
0,79 % en poids d'un initiateur thermique,
0,49 % en poids d'un agent de renforcement de l'adhérence et
0,49 % en poids d'un complexe de métal, sélectionné dans le groupe des composés de métaux de transition
- zinc, zirconium, fer, cobalt, titane, nickel, molybdène et manganèse ou
- étain, magnésium ou aluminium, ainsi que
- des terres rares telles que le cérium
avec les ligands organiques habituels, par exemple des acides aminés, l'acétate, les acides carboxyliques de manière générale, les amines et les acétylacétonates.

4. Système d'adhésif selon l'une des revendications 1 à 3, dans lequel la résine de coulée est une résine époxy, en particulier l'adipate de bis(3,4-époxycyclohexylméthyl) ou le carboxylate de 3,4-époxycyclohexylméthyl-3',4'-époxycyclohexane, l'alcool polyfonctionnel le 3(4),8(9)-bis(hydroxyméthyl)-tricyclo[5.2.1.0^{2,6}]décane et le complexe de métal le di-(2-éthylhexanoate) de zinc.

5. Utilisation dû système d'adhésif selon la revendication 1 pour la formation de collages de précision avec des tolérances dimensionnelles dans la plage des µm et inférieure au µm.
